# EUROPEAN PATENT SPECIFICATION

(11) **EP 1 293 079 B1**
(45) Date of publication and mention of the grant of the patent: **08.04.2009**
(21) Application number: 01938246.4
(22) Date of filing: 01.06.2001
(51) Int. Cl.: H04L 29/06, H04L 12/26

(54) **METHOD AND SYSTEM FOR SECURING A DATA SYSTEM**
VERFAHREN UND SYSTEM ZUM SICHERN EINES DATENSYSTEMS
PROCEDE ET SYSTEME PERMETTANT DE SECURISER UN SYSTEME DE DONNEES

(30) Priority: 07.06.2000 NL 1015389
(43) Date of publication of application: 19.03.2003
(73) Proprietor: Koninklijke KPN N.V., 9726 AE Groningen (NL)
(72) Inventor: DIJKSTRA, Willem, Pieter, NL-9302 GT Roden (NL); VAN STEENBERGEN, Ate, Sander, NL-9737 NN Groningen (NL)
(74) Representative: Wuyts, Koenraad Maria
(86) International application number: PCT/EP2001/006247
(87) International publication number: WO 2001/095590

(56) References cited:
- WO-A-00/05842
- US-A- 5 557 742
- US-A- 5 796 942
- LUNT T F: "A SURVEY OF INTRUSION DETECTION TECHNIQUES" COMPUTERS & SECURITY. INTERNATIONAL JOURNAL DEVOTED TO THE STUDY OF TECHNICAL AND FINANCIAL ASPECTS OF COMPUTER SECURITY,NL,ELSEVIER SCIENCE PUBLISHERS. AMSTERDAM, vol. 12, no. 4, 1 June 1993 (1993-06-01), pages 405-418, XP000382979 ISSN: 0167-4048

## Description

### BACKGROUND OF THE INVENTION

The invention relates to a method for securing a data system that is connected by communication means to other systems and exchanges data with those other systems via said communication means. The invention also relates to a security system for monitoring a data system that exchanges data with other systems via communication means. Present-day (Internet) security tools can only identify known attacks against a data system. Unknown attacks are not identified and can disrupt services. So-called network sniffers can log all the traffic on a network. As the bandwidths in the networks increase, however, sniffers deliver an enormous quantity of information, which makes it impossible to examine all the sniffed traffic on arrival. "Intrusion Detection Systems" are tools which, on top of a sniffer, attempt in real time to correlate network streams in the search for attacks. Drawbacks: the increased speeds and bandwidths on networks make the deployment of these tools more and more difficult. At gigabit network speeds, there are no systems still able to accomplish this task.

US 5,796,942 discloses a network surveillance system with a handler process for capturing network packets and filtering invalid packets, a first and second continuously sorted record file, and a scanner process for scanning all sessions occurring on the network and checking for the presence of certain rules. When a rule is met, indicating a security incident, a variety of appropriate actions may be taken, including notifying a network security officer via electronic or other mail or recording or terminating a network session. The surveillance system operates completely independently of any other network traffic and the network file server and therefore has no impact on network performance.

### SUMMARY OF THE INVENTION

The present invention is based on the understanding that only at the moment that a data system malfunctions, for example as a result of a "data attack", is it important for the last communication with the server to be preserved (comparable to the "black box" in aircraft). This recorded communication can then be used to analyse and ascertain the cause of the malfunctioning and to identify a possible new attack and to secure the data system against it.

The method and system according to the invention are characterised by the characterizing features of claims 1 and 4. A "moving window" is, as it were, placed over the exchanged (incoming and/or outgoing) data stream, the contents of which are not normally processed (analysed). Only after an abnormality has been detected in the operation of the data system being secured are the contents of the moving window preserved so they can be analysed. The invention therefore solves the problem of the large quantity of information and limited analysis time by not performing analysis continuously, but only when necessary.

### EMBODIMENTS

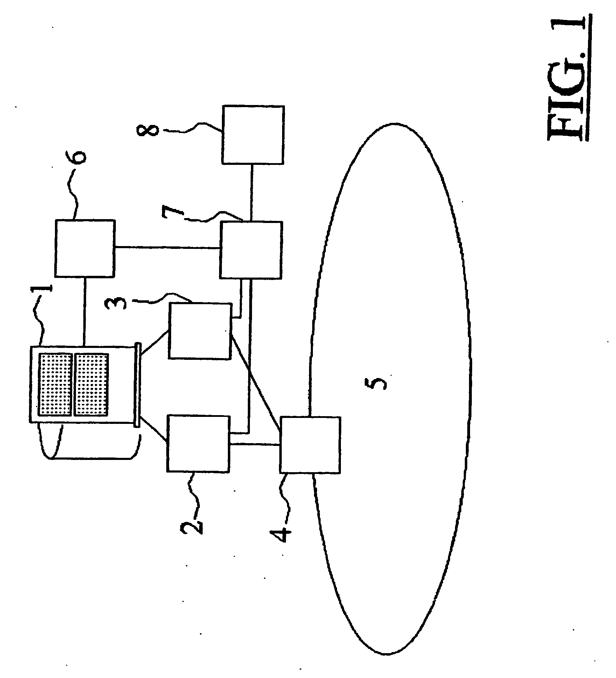

The method according to the invention is illustrated with the aid of figure 1. Figure 1 shows a data system 1, provided with an input buffer device 2 and an output buffer device 3, by means of which the data system 1 connects to the node 4 of a network 5 to which other (data) systems can be connected, with which the data system 1 exchanges data. The data system is secured by buffering the most recently exchanged data in the buffer devices 2 and 3. The normal operation of the data system 1 is monitored in a monitoring device 6. The monitoring device 6 controls an output device 7 such that only in the event of an abnormality in the operation of the data system will the most recent data, buffered in the buffer devices 2 and 3, be called up by the output device 7. The output device 7 may comprise a screen on which, after a fault has occurred in the data system, the data called up from the buffers 2 and 3 can be examined. The output device 7 can also comprise a printer. A "moving window" is, as it were, placed over the exchanged (incoming and/or outgoing) data stream, the contents of which are not normally processed (analysed). Only after an abnormality has been detected in the operation of the data system being secured are the contents of the moving window (in the buffer devices 2 and 3 respectively) preserved so they can be analysed. The data exchanged in the last moments before the occurrence of the fault can be analysed visually by qualified personnel. Alternatively, an analysis system 8 can be used, possibly in addition to the aforementioned method.

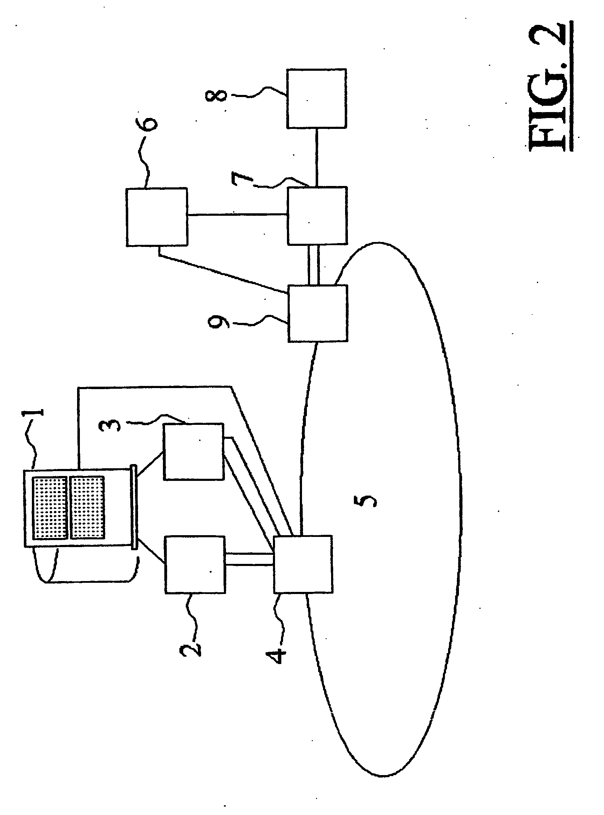

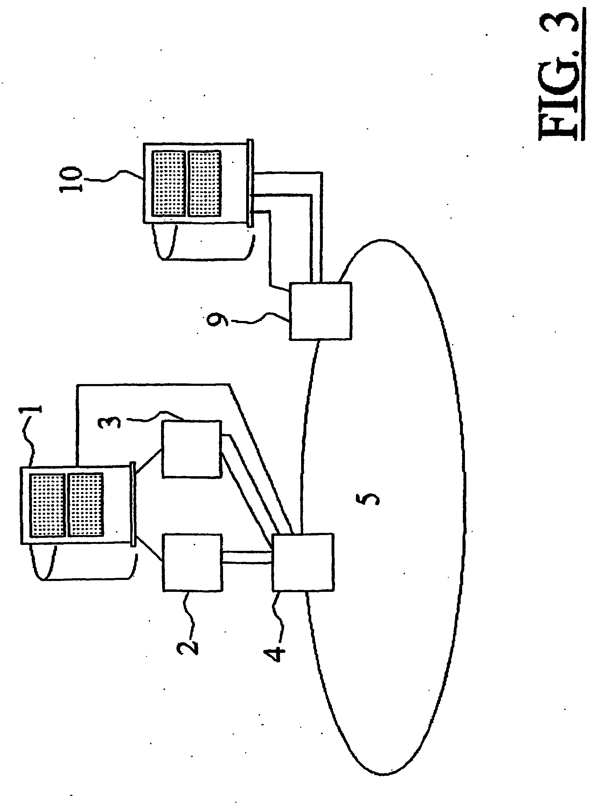

It should be noted that securing the data system 1 can also be achieved remotely, for example via the network 5, as shown in figure 2. In figure 2 the required connections between the devices 1, 2 and 3 on the one hand and the devices 6 and 7 on the other are accomplished via the network node 4 and a network node 9. These connections are, of course, depending on the network, preferably accomplished by virtual channels. The devices 6, 7 and 8 can form part of a security server 10, as shown in figure 3, which can monitor a large number of data systems 1. The behaviour of the data systems 1 to be secured is monitored in real time from security server 10, which receives information from the data systems 1 to be protected. If a data system 1 displays deviant behaviour, the contents of the buffer devices 2 and 3 are "tapped" and examined by the security server, possibly with aid of automated analysis means, such as device 8 in figure 2.

It is pointed out that where the above description mentions two buffer devices, 2 and 3, one for incoming data and one for outgoing data, these functions can in practice also be performed by a single input/output buffer. Should a disaster occur in the operation of the data system 1, this I/O buffer will then be read out and the communication data present therein at that moment will be made available to the device 7.

Deviant behaviour of a data system 1 can for example be: a characteristic quantity deviating from its statistical value, a peak load, a continuous very high load, a hard disk becoming full, active processes failing, etc.

The analysis could be used for:
* Forensic examination and solving questions of guilt, etc.
* Identification of (unknown) "network attacks"; the information thus obtained could then be used to protect the data systems even better.

## Claims

1. Method for securing a data system (1) that is connected by communication means (5) to other systems and exchanges data with those other systems via said communication means, said method including the step of continuously buffering said data by moving a window over the exchanged data
**characterized in that**
the method further comprises the steps of:
- monitoring the normal operation of the data system using a monitoring device (6) to detect abnormal operation of the data system (1)
- only if the monitoring device (6) detects abnormal operation of the data system (1), preserving the contents of the moving window and make the contents available for analysis.

2. The method according to claim 1, wherein the abnormal operation is a deviation of a characteristic quantity from a statistical value.

3. The method according to claim 2, wherein the abnormal operation relates to a peak load, a continuous vary high load, a hard disk becoming full or active processes failing.

4. Security system for monitoring a data system (1) that exchanges data with other systems via communication means (5), the system further comprising buffer means (2,3) for continuous buffering said data by moving a window over the exchanged data
**characterized by**
- monitoring means (6) for monitoring the data system for normal operation of the data system and for activating output means (7), such that only in the event the monitoring means detects abnormal operation of the data system, the contents of the moving window is preserved and made available for analysis; and
- analysis means (8) for analysing the data made available by the activated output means (7).

5. The security system according to claim 4, wherein the abnormal operation is a deviation of a characteristic quantity from a statistical value.

## Patentansprüche

1. Verfahren zum Sichern eines Datensystems (1), das durch Kommunikationsmittel (5) mit anderen Systemen verbunden ist und über die Kommunikationsmittel Daten mit diesen anderen Systemen austauscht, wobei das Verfahren den Schritt des kontinuierlichen Pufferns der Daten durch Bewegen eines Fensters über die ausgetauschten Daten umfaßt,
**dadurch gekennzeichnet, daß** das Verfahren ferner die folgenden Schritte umfaßt:
- Überwachen des normalen Betriebs des Datensystems unter Verwendung einer Überwachungseinrichtung (6), um einen abnormen Betrieb des Datensystems (1) zu detektieren
- Erhalten des Inhalts des sich bewegenden Fensters und Zurverfügungstellen des Inhalts für Analyse nur, wenn die Überwachungseinrichtung (6) einen abnormen Betrieb des Datensystems (1) detektiert.

2. Verfahren nach Anspruch 1, wobei der abnorme Betrieb eine Abweichung einer charakteristischen Größe von einem statistischen Wert ist.

3. Verfahren nach Anspruch 2, wobei der abnorme Betrieb eine Spitzenlast, eine hohe Last mit kontinuierlicher Variation, ein Vollwerden einer Festplatte oder ein Versagen aktiver Prozesse betrifft.

4. Sicherheitssystem zum Überwachen eines Datensystems (1), das über Kommunikationsmittel (5) Daten mit anderen Systemen austauscht, wobei das System ferner Puffermittel (2, 3) zum kontinuierlichen Puffern der Daten durch Bewegen eines Fensters über die ausgetauschten Daten umfaßt,
**gekennzeichnet durch**
- ein Überwachungsmittel (6) zum Überwachen des Datensystems auf normalem Betrieb und zum Aktivieren eines Ausgabemittels (7), dergestalt, daß nur, falls das Überwachungsmittel einen abnormen Betrieb des Datensystems detektiert, der Inhalt des sich bewegenden Fensters erhalten und für Analyse zur Verfügung gestellt wird; und
ein Analysemittel (8) zum Analysieren der **durch** das aktivierte Ausgabemittel (7) zur Verfügung gestellten Daten.

5. Sicherheitssystem nach Anspruch 4, wobei der abnorme Betrieb eine Abweichung einer charakteristischen Größe von einem statistischen Wert ist.

## Revendications

1. Procédé pour sécuriser un système de données (1) qui est connecté par un moyen de communication (5) à d'autres systèmes et qui échange des données avec ces autres systèmes via ledit moyen de communication, ledit procédé comprenant l'étape consistant à mettre en mémoire tampon lesdites données de manière continue en déplaçant une fenêtre au-dessus des données échangées,
**caractérisé en ce que**
ce procédé comprend en outre les étapes consistant à :
- surveiller le fonctionnement normal du système de données en utilisant un dispositif de surveillance (6) pour détecter le fonctionnement anormal du système de données (1)
- seulement si le dispositif de surveillance (6) détecte le fonctionnement anormal du système de données (1), conserver le contenu de la fenêtre mobile et rendre ce contenu disponible pour être analysé.

2. Procédé selon la revendication 1, dans lequel le fonctionnement anormal est un écart d'une quantité caractéristique par rapport à une valeur statistique.

3. Procédé selon la revendication 2, dans lequel le fonctionnement anormal est lié à une charge de pointe, à une charge très élevée continue, à un disque dur qui devient plein ou à la défaillance de processus actifs.

4. Système de sécurité pour surveiller un système de données (1) qui échange des données avec d'autres systèmes via un moyen de communication (5), ce système comprenant en outre des moyens mémoires tampons (2, 3) pour une mise en mémoire tampon continue desdites données en déplaçant une fenêtre au-dessus des données échangées
**caractérisé par**
- un moyen de surveillance (6) pour surveiller le système de données pour le fonctionnement normal du système de données et pour activer le moyen de sortie (7), de façon à ce que, seulement dans le cas où le moyen de surveillance détecte le fonctionnement anormal du système de données, le contenu de la fenêtre mobile soit conservé et rendu disponible pour être analysé ; et
- un moyen d'analyse (8) pour analyser les données rendues disponibles par le moyen de sortie activé (7).

5. Système de sécurité selon la revendication 4, dans lequel le fonctionnement anormal est un écart d'une quantité caractéristique par rapport à une valeur statistique.
